# EUROPÄISCHE PATENTSCHRIFT

(11) **EP 0 521 426 B1**
(45) Veröffentlichungstag und Bekanntmachung des Hinweises auf die Patenterteilung: **28.02.1996**
(21) Anmeldenummer: 92110972.4
(22) Anmeldetag: 29.06.1992
(51) Int. Cl.: C08L 23/08, C08J 5/18

(54) **Thermoplastische Polyolefin-Formmassen mit einem Gehalt an N,N'-Hexamethylen-1,6-bis-erucamid**
N,N'-hexamethylen-1,6-bis-erucamid containing thermoplastic polyolefin moulding composition
Compositions de moulage thermoplastiques à base de polyoléfines contenant du N-hexaméthylène-1,6-bis-écrucamide

(30) Priorität: 05.07.1991 DE 4122313
(43) Veröffentlichungstag der Anmeldung: 07.01.1993
(73) Patentinhaber: BASF Aktiengesellschaft, D-67063 Ludwigshafen (DE)
(72) Erfinder: Hub, Hans-Henning, Dr., W-6520 Worms 23 (DE)

(56) Entgegenhaltungen:
- DE-A- 2 057 738
- DE-B- 1 159 636

## Beschreibung

Die vorliegende Erfindung betrifft thermoplastische Formmassen, enthaltend
A) 80 bis 99,99 Gew.% mindestens eines Ethylenpolymerisats ausgewählt aus
   a₁) Ethylen-Vinylacetat-Copolymeren mit einem Vinylacetat-Anteil von 0,5 bis 50 Gew.%,
   a₂) Ethylen-(Meth)Acrylsäure-Copolymeren mit einem (Meth)Acrylsäure-Anteil von 0,01 bis 20 Gew.%, wobei 0 bis 50 Gew.% der (Meth)Acrylsäuregruppen neutralisiert sein können,
   a₃) Ethylen-(Meth)Acrylsäure-(Meth)Acrylsäureester-Copolymerisate mit einem (Meth)Acrylsäure-Anteil von 0,01 bis 20 Gew.% und einem (Meth)Acrylsäureester-Anteil von 0,5 bis 35 Gew.%,
B) 0,01 bis 2 Gew.% N,N'-Hexamethylen-1,6-bis-erucamid sowie
C) 0 bis 19,99 Gew.% weiterer Zusatzstoffe und Verarbeitungshilfsmittel.

Darüber hinaus betrifft die Erfindung die Verwendung derartiger Formmassen zur Herstellung von Folien und die so erhaltenen Folien.

Aus Polyolefinen, insbesondere Ethylenpolymerisaten werden in großem Umfang Folien hergestellt. Die Gleitfähigkeit und das Blockverhalten solcher Folien sind jedoch nicht in vollem Umfang zufriedenstellend. Durch die unbefriedigende Gleitfähigkeit wird die Herstellung von Verpackungen wie Beuteln und deren Bedrucken auf automatischen Maschinen beeinträchtigt. Eine zu starke Blockneigung erschwert das Abheben der Beutel vom Stapel sowie ihr Öffnen und Füllen.

Es ist bekannt, daß man durch Zusatz von Fettsäureamiden wie Ölsäureamid, Erucamid oder Stearinsäureamid das Gleitverhalten von Polyethylenfilmen verbessern kann. Weiterhin wird in der DE-B 11 59 636 beschrieben, daß das Gleit- und Blockverhalten von Folien aus Polyethylen mit niedriger Dichte (LDPE) durch Zusatz von Säureamiden der Formel R-NH-(CH₂)ₙ-NH-R, wobei R für den Erucasäurerest steht und n einen Wert von 6 bis 8 hat, verbessert werden kann.

Aus der EP-A 68 148 ist der Zusatz eines Amids aus der Reihe N,N'-Ethylenbisoleamid, N,N'-Ethylenbis-erucamid, N,N'-Dioleyladipamid und N,N'-Di-erucyladipamid unter anderem zu Ethylen/Vinylacetat- und gegebenenfalls teilneutralisierten Ethylen/Methacrylsäure-Copolymeren zur Verringerung der Klebneigung von Pellets aus diesen Polymeren bekannt.

Schließlich werden in der US-A 4 607 072 Formmassen auf der Basis von linearem Polyethylen niedriger Dichte (LLDPE) beschrieben, die bis zu 5 Gew.% eines Diamids der Formel R-CO-NH-CH₂-CH₂-NH-CO-R' enthalten, wobei R und R' sich von einer C₈-C₂₄-Fettsäure ableiten.

Aus diesen Formmassen hergestellte Filme und Folien weisen zwar gegenüber den Folien aus entsprechenden Formmassen ohne Additive ein verbessertes Gleit- oder Blockverhalten auf, doch ist das Eigenschaftsspektrum insgesamt (unter Einbeziehung der Transparenz) nicht zufriedenstellend. Aufgabe der vorliegenden Erfindung war es daher, thermoplastische Formmassen auf der Basis von Ethylenpolymerisaten zur Verfügung zu stellen, aus denen Folien und Filme hergestellt werden können, die in Kombination eine gute Transparenz sowie gutes Gleitverhalten und geringe Blockneigung aufweisen.

Diese Aufgabe wird erfindungsgemäß mit den eingangs beschriebenen thermoplastischen Formmassen gemäß Anspruch 1 gelöst. Bevorzugte Massen dieser Art sind den Unteransprüchen zu entnehmen.

Die Ethylen-Vinylacetat-Copolymerisate a₁) sind als solche bekannt und kommerziell im Handel erhältlich. Der Vinylacetat-Gehalt liegt im Bereich von 0,5 bis 50, vorzugsweise 1 bis 40 und insbesondere 1,5 bis 30 Gew.%. Der Schmelzindex (MFI) liegt im allgemeinen im Bereich von 0,1 bis 30, vorzugsweise von 0,2 bis 20 und insbesondere von 0,5 bis 12 g/10 min (gemessen bei 190°C und 2,16 kg Belastung nach DIN 53 735).

Verfahren zur Herstellung solcher Polymere sind dem Fachmann bekannt und in der Literatur beschrieben, so daß sich hier nähere Angaben erübrigen. Nur beispielsweise seien als kommerziell erhältliche Produkte die Lupolen®-Produkte der BASF AG erwähnt.

Die Ethylen-(Meth)Acrylsäure-Copolymeren a₂) sind als solche ebenfalls bekannt und kommerziell erhältlich. Der Gewichtsanteil an Methacrylsäure oder Acrylsäure im Copolymeren liegt im Bereich von 0,01 bis 20, vorzugsweise 0,1 bis 15 und insbesondere 0,5 bis 12 Gew.%.

Bis zu 50, vorzugsweise 2 bis 45 und insbesondere 5 bis 40 % der (Meth)Acrylsäure-Einheiten können mit Gegenionen neutralisiert sein. Als Gegenionen kommen im Fall der Acrylsäure-Copolymere vorzugsweise Na, K, Zn, Ca, Mg, Al und (NH₄)⁺ und im Fall der Methacrylsäure-Copolymere insbesondere Na und Zn in Frage.

Der Schmelzindex (MFI) (190°C/2,16 kg Belastung) liegt im allgemeinen im Bereich von 0,1 bis 50, vorzugsweise von 0,3 bis 30 g/10 min. Verfahren zur Herstellung solcher Produkte sind bekannt, so daß sich hier nähere Angaben erübrigen.

Geeignete Produkte sind unter den Handelsnamen Nucrel® und Surlyn® (DuPont de Nemours) und Lucalen® (BASF AG) erhältlich.

Als Komponente A) können auch Copolymerisate aus Ethylen, (Meth)Acrylsäure und (Meth)Acrylsäureestern eingesetzt werden. Vorzugsweise werden C₁-C₁₂-Ester der Acrylsäure oder Methacrylsäure eingesetzt, insbesondere Ethylacrylat, n-Butylacrylat, i-Butylacrylat, 2-Ethylhexylacrylat und Methylmethacrylat, um nur einige Beispiele zu nennen.

Der (Meth)Acrylsäure-Anteil liegt im Bereich von 0,01 bis 20, vorzugsweise 0,1 bis 15 und insbesondere 0,5 bis 12 Gew.%, der Gewichtsanteil an (Meth)Acrylsäureestern im Bereich von 0,5 bis 35, vorzugsweise 1 bis 25 Gew.%. Es versteht sich, daß auch Copolymerisate aus mehr als 3 Monomeren eingesetzt werden können.

Der Schmelzindex der Copolymeren a₃) liegt im allgemeinen bei 0,01 bis 50, vorzugsweise 0,3 bis 30 und insbesondere 0,5 bis 25 g/10 min (190°C/2,16 kg Belastung).

Die Herstellung solcher Copolymere kann nach dem Fachmann bekannten Verfahren erfolgen; im Handel sind geeignete Produkte unter der Bezeichnung Lucalen® bzw. Lupolen® (BASF AG) erhältlich.

Selbstverständlich können auch Mischungen aus Copolymeren a₁), a₂) und a₃) in beliebigem Verhältnis eingesetzt werden. Der Gesamtanteil der Komponente A) an den erfindungsgemäßen Formmassen liegt im Bereich von 80 bis 99,98, vorzugsweise von 90 bis 99,95 Gew.%.

Bei der Komponente B) handelt es sich um N,N'-Hexamethylen-1,6-bis-erucamid, welches beispielsweise durch Umsetzung von Erucasäure mit Thionylchlorid und Reaktion des so erhaltenen Erucasäurechlorids mit Hexamethylendiamin hergestellt werden kann. Ein besonders geeignetes Produkt wird von Croda Universal Ltd. unter der Bezeichnung Crodamid® HBE vertrieben.

Der Anteil der Komponente B) liegt im Bereich von 0,01 bis 2, vorzugsweise von 0,02 bis 0,8 Gew.%, bezogen auf das Gesamtgewicht der erfindungsgemäpen Formmassen.

Neben den Komponenten A) und B) können die erfindungsgemäßen Formmassen noch 0 bis 19,99, vorzugsweise 0 bis 10 Gew.% weiterer Zusatzstoffe und Verarbeitungshilfsmittel enthalten. Aus der Vielzahl solcher Zusatzstoffe seien hier nur von der Komponente B) verschiedene Fettsäureamide und N,N'-Ethylenbis-erucamid oder Antiblockmittel wie gefällte Kieselsäure oder gemahlene Diatomeenerde genannt, die auch als Komponente C) bevorzugt werden. Es ist jedoch nicht zwingend erforderlich, zur Erzielung des gewünschten Ergebnisses eine Komponente C) zuzusetzen.

Die Herstellung der erfindungsgemäßen Formmassen kann durch Mischen der Komponenten im festen Zustand und anschließendes Aufschmelzen der Mischung, beispielsweise in einem Extruder, oder auch durch Zugabe der Komponente B) und gegebenenfalls C) zur Schmelze der Komponente A) und anschließende Homogenisierung erfolgen.

Alternativ kann auch die granulierte Komponente A) mit der Komponente B) durch Aufstäuben oder Auftrommeln gemischt und anschließend in Knetern homogenisiert werden.

Schließlich können auch Lösungen der Komponente B) in leichtflüchtigen Lösungsmitteln wie Benzin, Chloroform und Methanol oder der Gemische während des Granulierens der Polyolefine in Extrudern zugesetzt werden.

Die erfindungsgemäßen Formmassen lassen sich besonders vorteilhaft in an sich bekannter Weise zu Folien und Filmen mit guter Transparenz, guter Gleitfähigkeit und geringer Blockneigung verarbeiten.

### Beispiele

In den nachfolgend beschriebenen Beispielen wurden folgende Komponenten eingesetzt:

### Komponente A

- A/1: Ethylen/Vinylacetat-Copolymer mit einem Vinylacetat-Anteil von 3,0 Gew.%, einer Dichte von 0,926 g/cm³ (nach DIN 53 479) und einem Schmelzindex von 2,7 g/10 min (gemessen bei 190°C und einer Belastung von 2,16 kg nach DIN 53 735) (Lupolen® V2520J der BASF Aktiengesellschaft).
- A/2: teilneutralisiertes Ethylen/Acrylsäure-Copolymer mit einem Acrylsäure-anteil von 7 Gew.% und einem Zinkacrylat-Anteil von 1,8 Gew.%, einer Dichte von 0,941 g/cm³ und einem Schmelzindex (gemessen wie bei A/1) von 5,5 g/10 min (Lucalen® I 4300MX der BASF Aktiengesellschaft).
- A/3: Ethylen/Acrylsäure-Copolymerisat mit einem Acrylsäure-Anteil von 8,2 Gew.%, einer Dichte von 0,934 g/cm³ und einem Schmelzindex (gemessen wie bei A/1) von 7 g/10 min (Lucalen® A 3710MX der BASF Aktiengesellschaft)

### Komponente B

B/1 N,N-Hexamethylen-1,6-bis-erucamid
B/V1 Erucasäureamid
B/V2 Ölsäureamid
B/V3 N,N'-Ethylen-bis-oleamid
B/V4 N,N'-Ethylen-bis-erucamid
B/V5 Stearyl-stearamid

### Beispiele 1 bis 16

In den in Tabelle 1 beschriebenen Beispielen wurde das Ethylenpolymerisat A/1 mit den jeweils angegebenen Mengen des entsprechenden Gleitmittels in der Schmelze auf einem Extruder abgemischt, extrudiert und granuliert. Aus dem Granulat wurden mit Hilfe einer Ringdüse bei 150°C Folien mit einer mittleren Dicke von 50 µm hergestellt, an denen nach DIN 53 366 die Blockkraft bestimmt wurde. Dazu wurden die Folien 1 h bei 70°C unter einer Belastung von 1 N/cm verblockt und anschließend auf einer Zerreißmaschine mit elektronischer Kraftmessung die Kraft in Newton bestimmt, die notwendig ist, um einen 15 mm breiten Streifen der bei 70°C verblockten Folien zu trennen.

**Tabelle 1**

| Bsp. | Komponente A | Komponente B | | Blockkraft (DIN 53366) (N) | Streuwert (%) |
|---|---|---|---|---|---|
| | | Menge [ppm] | Art | | |
| 1 | A/1 | 500 | B/1 | 24 | 8,7 |
| 2 | A/1 | 750 | B/1 | 14 | 8,1 |
| 3 | A/1 | 1000 | B/1 | 12 | 8,0 |
| 4V | A/1 | 500 | B/V1 | 148 | 9,2 |
| 5V | A/1 | 1000 | B/V1 | 150 | 9,4 |
| 6V | A/1 | 500 | B/V2 | 166 | 9,6 |
| 7V | A/1 | 1000 | B/V2 | 142 | 8,7 |
| 8V | A/1 | 500 | B/V3 | 116 | 11,2 |
| 9V | A/1 | 1000 | B/V3 | 62 | 9,5 |
| 10V | A/1 | 500 | B/V4 | 44 | 8,6 |
| 11V | A/1 | 1000 | B/V4 | 26 | 10,2 |
| 12 | A/1 | 500+500 | B/1+B/V1 | 28 | 7,6 |
| 13V | A/1 | 500+500 | B/V1+B/V4 | 55 | 10,0 |
| 14 | A/1 | 375+375 | B/1+B/V1 | 28 | 8,1 |
| 15V | A/1 | 375+375 | B/V1+B/V4 | 53 | 10,9 |
| 16V | A/1 | - | - | 173 | 10,3 |

Die Ergebnisse Zeigen die besonders gute Wirkung der erfindungsgemäßen Komponente B/1 im Vergleich zu bekannten Gleitmitteln.

### Beispiele 17-32

Die Komponente A/2 wurde wie bei den Beispielen 1 bis 16 mit den Komponenten B) in den in Tabelle 2 angegebenen Anteilen gemischt und anschließend analog zu den Beispielen 1 bis 16 Folien hergestellt und die Blockkraft nach DIN 53 366 nach Verblockung bei 50 und 70°C bestimmt.

Einige der in Tabelle 2 angegebenen Formmassen enthalten noch gemahlene Diatomeenerde (Celite® 263 LD, als Komponente C/1 bezeichnet) und/oder gefällte Kieselsäure (Sylobloc® 45, als Komponente C/2 bezeichnet).

**Tabelle 2**

| Bsp. | Komp.A | Komp. B | | Komp.C | | Blockkraft | | Streuwert (%) |
|---|---|---|---|---|---|---|---|---|
| | | Menge [ppm] | Art | [ppm] | Art | 50°C | 70°C | |
| 17 | A/2 | 1000 | B/1 | - | | 131 | nicht meßbar | 9 |
| 18 | A/2 | 2000 | B/1 | - | | 60 | 68 | 11 |
| 19 | A/2 | 3000 | B/1 | - | | 38 | 17 | 12 |
| 20V | A/2 | 1000 | B/V3 | - | | 272 | - | 11 |
| 21V | A/2 | 2000 | B/V3 | - | | 284 | - | 11 |
| 22V | A/2 | 3000 | B/V3 | - | | 265 | - | 13 |
| 23V | A/2 | 1000 | B/V4 | - | | 125 | - | 14 |
| 24V | A/2 | 2000 | B/V4 | - | | 99 | - | 13 |
| 25V | A/2 | 3000 | B/V4 | - | | 54 | - | 12 |
| 26V | A/2 | 2000 | B/V5 | - | | 180 | nicht meßbar | 14 |
| 27V | A/2 | 2000 | B/V5 | 6000 | C/1 | 44 | 294 | 46 |
| 28V | A/2 | 2000 | B/V5 | 6000 | C/2 | 31 | 135 | 35 |
| 29 | A/2 | 2000+1000 | B/1+B/V5 | - | | 40 | 50 | 7 |
| 30 | A/2 | 2000+2000 | B/1+B/V5 | - | | 15 | 40 | 10 |
| 31 | A/2 | 5000 | B/1 | - | | 1 | 3 | - |
| 32V | A/2 | - | - | - | | 266 | - | 5 |

### Beispiele 33 bis 48

Die Abmischung der Komponenten, die Herstellung der Folien und die Bestimmung der Blockkraft erfolgte wie bei den Beispielen 17 bis 30 beschrieben; es wurde jedoch als Komponente A A/3 eingesetzt.

Tabelle 3 gibt die Zusammensetzung und die Ergebnisse der Messungen.

**Tabelle 3**

| Bsp. | Komp.A | Komp. B | | Komp.C | | Blockkraft | | Streuwert (%) |
|---|---|---|---|---|---|---|---|---|
| | | Menge [ppm] | Art | [ppm] | Art | 50°C | 70°C | |
| 33 | A/3 | 1000 | B/1 | - | - | 94 | - | 4 |
| 34 | A/3 | 2000 | B/1 | - | - | 77 | - | 4 |
| 35 | A/3 | 3000 | B/1 | - | - | 57 | 15 | 4 |
| 36V | A/3 | 1000 | B/V3 | - | - | 313 | - | 3 |
| 37V | A/3 | 2000 | B/V3 | - | - | 336 | - | 3 |
| 38V | A/3 | 3000 | B/V3 | - | - | 405 | - | 3 |
| 39V | A/3 | 1000 | B/V4 | - | - | 344 | - | 4 |
| 40V | A/3 | 2000 | B/V4 | - | - | 115 | - | 4 |
| 41V | A/3 | 3000 | B/V4 | - | - | 54 | nicht meßbar | 5 |
| 42V | A/3 | 1000 | B/V5 | - | - | 326 | - | 3 |
| 43V | A/3 | 2000 | B/V5 | - | - | 388 | - | 3 |
| 44V | A/3 | 2000 | B/V5 | 3000 | C/1 | 100 | - | 17 |
| 45V | A/3 | 2000 | B/V5 | 3000 | C/2 | 52 | nicht meßbar | 20 |
| 46 | A/3 | 2000+1000 | B/1+B/V5 | - | - | 41 | 44 | 2 |
| 47 | A/3 | 2000+1000 | B/1+B/V5 | - | - | 42 | 52 | 2 |
| 48V | A/3 | - | - | - | - | 340 | - | 6 |

## Patentansprüche

1. Thermoplastische Formmassen, enthaltend
A) 80 bis 99,99 Gew.% mindestens eines Ethylenpolymerisats ausgewählt aus
a₁) Ethylen-Vinylacetat-Copolymeren mit einem Vinylacetat-Anteil von 0,5 bis 50 Gew.%,
a₂) Ethylen-(Meth)Acrylsäure-Copolymeren mit einem (Meth)Acrylsäure-Anteil von 0,01 bis 20 Gew.%, wobei 0 bis 50 Gew.% der (Meth)Acrylsäuregruppen neutralisiert sein können,
a₃) Ethylen-(Meth)Acrylsäure-(Meth)Acrylsäureester-Copolymerisate mit einem (Meth)Acrylsäure-Anteil von 0,01 bis 20 Gew.% und einem (Meth)Acrylsäureester-Anteil von 0,5 bis 35 Gew.%,
B) 0,01 bis 2 Gew.% N,N'-Hexamethylen-1,6-bis-erucamid sowie
C) 0 bis 19,99 Gew.% weiterer Zusatzstoffe und Verarbeitungshilfsmittel.

2. Thermoplastische Formmassen nach Anspruch 1, enthaltend 0,02 bis 0,8 Gew.% der Komponente B).

3. Verwendung der thermoplastischen Formmassen gemäß den Ansprüchen 1 bis 2 zur Herstellung von Folien und Filmen.

4. Folien, hergestellt aus thermoplastischen Formmassen gemäß den Ansprüchen 1 bis 2.

## Claims

1. A thermoplastic molding material containing
A) from 80 to 99.99% by weight of at least one ethylene polymer selected from the group consisting of
a₁) ethylene/vinyl acetate copolymers containing from 0.5 to 50% by weight of vinyl acetate,
a₂) ethylene/(meth)acrylic acid copolymers containing from 0.01 to 20% by weight of (meth)acrylic acid, where from 0 to 50% by weight of the (meth)acrylic acid groups may be neutralized, and
a₃) ethylene/(meth)acrylic acid/(meth)acrylate copolymers containing from 0.01 to 20% by weight of (meth)acrylic acid and from 0.5 to 35% by weight of (meth)acrylates,
B) from 0.01 to 2% by weight of N,N'-hexamethylene-1,6-biserucamide and
C) from 0 to 19.99% by weight of further additives and processing assistants.

2. A thermoplastic molding material as claimed in claim 1, containing from 0.02 to 0.8% by weight of component B).

3. The use of a thermoplastic molding material as claimed in claims 1 and 2 for the production sheets and films.

4. A sheet produced from a thermoplastic molding material as claimed in claims 1 and 2.

## Revendications

1. Masses à mouler thermoplastiques, contenant
A) 80 à 99,99% en poids d'au moins un polymère d'éthylène choisi parmi
a₁) des copolymères éthylène/acétate de vinyle ayant une proportion d'acétate de vinyle de 0,5 à 50% en poids,
a₂) des copolymères éthylène/acide (méth)acrylique ayant une proportion d'acide (méth)acrylique de 0,01 à 20% en poids, 0 à 50% en poids des groupements acide (meth)acrylique pouvant être neutralisés,
a₃) des copolymères éthylène/acide (méth)acrylique/ ester d'acide (méth)acrylique ayant une proportion d'acide (méth)acrylique de 0,01 à 20% en poids et une proportion d'ester d'acide (méth)acrylique de 0,5 à 35% en poids,
B) 0,01 à 2% en poids de N,N'-hexaméthylène-1,6-bis-érucamide, ainsi que
C) 0 à 19,99% en poids d'autres additifs et agents auxiliaires de transformation.

2. Masses à mouler thermoplastiques selon la revendication 1, contenant 0,02 à 0,8% en poids du composant B).

3. Utilisation des masses à mouler thermoplastiques selon la revendication 1 ou 2 pour la fabrication de feuilles et de films.

4. Feuilles fabriquées à partir de masses à mouler thermoplastiques selon la revendication 1 ou 2.
